# EUROPEAN PATENT SPECIFICATION

(11) **EP 2 741 940 B1**
(45) Date of publication and mention of the grant of the patent: **05.07.2017**
(21) Application number: 12821359.2
(22) Date of filing: 04.05.2012
(51) Int. Cl.: B60Q 1/56, B60R 13/00

(54) **LICENSE PLATE DEVICE FOR VEHICLE**
KENNZEICHENSCHILD FÜR EIN FAHRZEUG
DISPOSITIF DE PLAQUE D'IMMATRICULATION POUR VÉHICULE

(30) Priority: 08.08.2011 CN 201120285750 U; 29.08.2011 CN 201120318644 U; 19.12.2011 CN 201110427248
(43) Date of publication of application: 18.06.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: GONG, Qing, Shenzhen Guangdong 518118 (CN); WU, Bo, Shenzhen Guangdong 518118 (CN); ZHONG, Yilin, Shenzhen Guangdong 518118 (CN); SONG, Xinxin, Shenzhen Guangdong 518118 (CN); WANG, Jinqiu, Shenzhen Guangdong 518118 (CN); BAI, Junming, Shenzhen Guangdong 518118 (CN); DAI, Jun, Shenzhen Guangdong 518118 (CN); SU, Fengwu, Shenzhen Guangdong 518118 (CN); LUO, Ditian, Shenzhen Guangdong 518118 (CN)
(74) Representative: m patent group
(86) International application number: PCT/CN2012/075105
(87) International publication number: WO 2013/020398

(56) References cited:
- EP-A1- 1 477 368
- EP-A1- 1 550 991
- CN-A- 101 011 952
- CN-U- 202 175 002
- CN-Y- 2 670 175
- FR-A1- 2 879 981
- US-A- 5 105 179

## Description

### FIELD

The present disclosure relates to the field of vehicle, and more particularly to an improved license plate device for a vehicle.

### BACKGROUND

There is a large difficulty in light emitting of a conventional logo. Only a halation may be formed on the edge of the logo pattern, however, light emitting of the entire surface of the pattern may not be achieved. Therefore, the conventional logo plays a role of decoration, however, due to its over low luminance, the conventional logo may not be easily identified by other road users especially when light is insufficient or at night.

In the prior art, although the illuminating effect of forming a halation on the edge of some logos may be achieved, the luminance is over low, and an assembly is thicker. In addition, the raised character illuminating effect of the logo achieved by designing the structure of an illuminated face using the refraction principle does not apply to illuminating of a closed type logo pattern, and a waterproof rubber ring needs to be added to ensure the sealing performance of the logo pattern, which is difficult to operate in practical product manufacture and increases the difficulty and the cost of assembling.

EP 1477368A1 discloses an illuminated license plate 10 for vehicles, according to the preamble of claim 1 including a light guide 12 having opposite major front and back faces 14,16 and side faces 18, 20, 22, 24, and an elongate light source 26 arranged along at least a portion of at least one of the side faces 20 of the light guide 12 for illuminating the light guide 12. Furthermore, the illuminated license plate 10 includes a light-transmissive retro-reflective film 50 and indicia 56, 58, in which the light-transmissive retro-reflective film 50 and the indicia 56, 58 are arranged in front of the front face 14 of the light guide 12.

### SUMMARY

Embodiments of the present disclosure seek to solve at least one of the problems existing in the art to at least some extent, or to provide a consumer with a useful commercial choice. Accordingly, a license plate device for a vehicle is provided, which may emit light selectively, may be used as a common license plate when not emitting light, may allow the entire surface of the logo pattern to emit light with soft and uniform illuminating effect, and consequently may be identified when light is insufficient and may be beautiful and aesthetic.

According to embodiments of a first aspect of the present disclosure, a license plate device for a vehicle may be provided. The license plate device may comprise: a first shell having a transparent region forming a first predetermined logo pattern and a nontransparent region; a second shell fixedly connected with the first shell, with a sealed accommodating space defined therebetween; a bottom plate disposed in the sealed accommodating space; a light guide plate disposed between the bottom plate and the first shell which is formed with an accommodating groove; and a circuit board disposed between the light guide plate and the second shell which is formed with an illuminating element on a surface thereof facing toward the light guide plate to be accommodated in the accommodating groove, in which the light guide plate is formed with a plurality of microprism structures configured to transmit at least a part of light emitted by the illuminating element penetrating through the light guide plate from a face of the light guide plate opposite to the first shell.

With the license plate device for the vehicle according to an embodiment of the present disclosure, by hermetically connecting the second shell with the first shell, the sealed accommodating space is isolated from an external space, thus ensuring the weatherability of the license plate device. By setting the transparent region of the first shell into a predetermined logo pattern, because a face of the bottom plate opposite to the first shell has a metal ground color, when the predetermined logo pattern does not need to be illuminated, the color of the bottom plate may be displayed through the transparent region of the first shell, and the predetermined logo pattern with a metal ground color may be directly observed, so that the license plate device may have the characteristics of a conventional one. When the predetermined logo pattern needs to be illuminated, the light guide plate is illuminated and cooperated with the first shell, total reflection of light in the light guide plate may be destroyed by the plurality of microprism structures on the light guide plate to scatter light and change the direction of the light, and the light emitted by the illuminating element is refracted out from the face of the light guide plate opposite to the first shell and penetrates through the transparent region of the first shell. As a result, the illuminated predetermined logo pattern may be viewed, the entire surface of the predetermined logo pattern may be presented in an exquisite, soft and uniform manner. Therefore, not only may the license plate device be easily identified when light is insufficient, for example, at night, but also the license plate device may be aesthetic and attractive for viewers.

In some embodiments, each microprism structure is provided on a surface of the light guide plate facing toward the bottom plate, and the microprism structure has a triangular cross section in a plane in parallel with a lateral side of the light guide plate, and a bottom edge of the triangle faces toward the bottom plate. According to embodiments of the first aspect of the invention, the bottom plate is formed with a via hole, through which the illuminating element penetrates to be accommodated in the accommodating groove.

In some embodiments, the transparent region has a flat structure, a depressed structure or a protruded structure.

In some embodiments, the light guide plate and the microprism structure are integrally formed.

In some embodiments, the microprism structure and the light guide plate are integrally formed by injection molding, extrusion molding, or the plurality of microprism structures are formed on the light guide plate by hot press molding.

In some embodiments, the light guide plate is made from an anti-UV material.

In some embodiments, the illuminating element is an LED or an LD.

In some embodiments, an edge of the light guide plate is cut into an inclined plane.

In some embodiments, the bottom plate is a metal plate or a plate formed with a metal layer on a surface thereof.

In some embodiments, the circuit board is electrically connected with a lamplight control circuit of the vehicle.

In some embodiments, the license plate device further comprising: a sensing element for detecting an environmental illuminance; and a controller for controlling the illuminating element to turn on or off according to the illuminance detected by the sensing element.

In some embodiments, the license plate device further comprising: a shading film disposed between the light guide plate and the first shell for blocking light which are not refracted by the light guide plate but transmitted out directly after emitted by the illuminating element.

In some embodiments, the first shell and the second shell are hermetically connected with each other.

In some embodiments, the first shell and the second shell are hermetically connected with each other by ultrasonic welding.

In some embodiments, the license plate device further comprising: a rubber plug embedded in the second shell, through which a conducting wire is penetrated to be connected with the circuit board.

According to an embodiment of a second aspect of the present disclosure, a license plate device for a vehicle may be provided. The license plate device may comprise: a first shell having a transparent region forming a first predetermined logo pattern and a nontransparent region; a second shell fixedly connected with the first shell with a sealed accommodating space defined therebetween; a bottom plate disposed in the sealed accommodating space; a light guide plate disposed between the bottom plate and the first shell which is formed with an accommodating groove; and a circuit board disposed between the light guide plate and the second shell which is formed with an illuminating element on a surface thereof facing toward the light guide plate to be accommodated in the accommodating groove.

In some embodiments, a surface of the bottom plate facing toward the first shell is formed with a metal layer, or the bottom plate is a metal plate.

In some embodiments, a shading film is further disposed between the first shell and the light guide plate.

In some embodiments, the metal layer is formed by physical vapor deposition, electroplating, chemical plating or spray coating.

In some embodiments, the circuit board is provided between the bottom plate and the second shell, and the first predetermined logo pattern on the first shell has a plat structure, a depressed structure or a protruded structure.

In some embodiments, the light guide plate is formed with light guide microprism structures, a region constituted by the microprism structure corresponds to a region of the first predetermined logo pattern on the first shell, and the region constituted by the microprism structures is larger than the region of the first predetermined logo pattern on the first shell.

In some embodiments, the second shell is formed with a second predetermined logo pattern, and the first predetermined logo pattern is configured to have a pattern substantially identical with that of the second predetermined logo pattern when transformed to a direction toward which the second predetermined logo pattern faces.

In some embodiments, the license plate device further comprising: a horizontal rotating device disposed on both horizontal lateral sides of the bottom plate for rotating the license plate device horizontally.

In some embodiments, the horizontal rotating device comprises: a drive shaft disposed on one horizontal lateral side of the bottom plate for controlling the license plate device to rotate about a horizontal direction; and a restricting shaft disposed on the other horizontal lateral side of the bottom plate for controlling the rotating and positioning of the license plate device about the horizontal direction.

In some embodiments, the horizontal rotating device is disposed on both horizontal sides of the bottom plate along a horizontal geometrical central line of the bottom plate.

In some embodiments, the first predetermined logo pattern and the second predetermined logo pattern are horizontally axisymmetrical.

In some embodiments, the license plate device further comprising: a vertical rotating device disposed on both vertical sides of the bottom plate for rotating the license plate device about a vertical direction.

In some embodiments, the vertical rotating device comprises: a drive shaft disposed on one vertical side of the bottom plate for controlling the license plate device to rotate about the vertical direction; and a restricting shaft disposed on the other vertical side of the bottom plate for controlling the rotating and positioning of the license plate device about the vertical direction.

In some embodiments, the vertical rotating device is disposed on both vertical sides of the bottom plate along a vertical geometrical central line of the bottom plate.

In some embodiments, the first predetermined logo pattern and the second predetermined logo pattern are vertically axisymmetrical.

In some embodiments, a reflecting plate is disposed between the light guide plate and the circuit board.

In some embodiments, a photosensing element is disposed on a side of the circuit board facing toward the first shell.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference the accompanying drawings, in which:
Fig. 1 is an exploded perspective view of a license plate device for a vehicle according to an embodiment of the present disclosure;
Fig. 2 is an exploded perspective view of a license plate device for a vehicle according to another embodiment of the present disclosure;
Fig. 3 is a cross-sectional view of a light guide plate in a license plate device for a vehicle according to another embodiment of the present disclosure;
Fig. 4 is an exploded perspective view of a license plate device for a vehicle according to still another embodiment of the present disclosure; and
Fig. 5 is an exploded perspective view of a license plate device for a vehicle according to yet another embodiment of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

### First Embodiment

The license plate device for the vehicle according to an embodiment of the present disclosure will be described below with reference to the drawings.

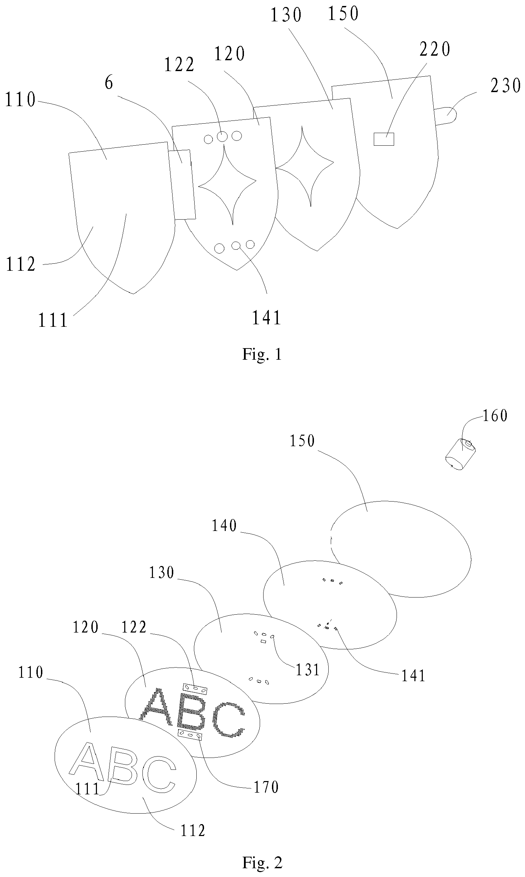

As shown in Fig. 1, the license plate device for the vehicle according to an embodiment of the present disclosure may comprise: a first shell 110 having a transparent region 111 forming a first predetermined logo pattern and a nontransparent region 112; a second shell 150 fixedly connected with the first shell 110, with a sealed accommodating space (not shown) defined therebetween; a bottom plate 130 disposed in the sealed accommodating space; a light guide plate 120 disposed between the bottom plate 130 and the first shell 110 which is formed with an accommodating groove 122; and a circuit board 140 disposed between the light guide plate 120 and the second shell 150 which is formed with an illuminating element 141 on a surface thereof facing toward the light guide plate 120 to be accommodated in the accommodating groove 122.

As shown in Fig. 1, the first shell 110 may be a plastic plate, in which a region of the first predetermined logo pattern is transparent, and the remaining regions may have desired colors after plating treatment. Alternatively, the second shell 150 is a plastic plate. A surface of the bottom plate 130 facing toward the first shell 110 is formed with a metal layer, or the bottom plate 130 is a metal plate. In order to allow the logo pattern to illuminate brightly at night, advantageously, a reflecting layer is formed on a surface of the bottom plate 130, so that the bottom plate 130 may have intense reflection effect. In one embodiment, the metal layer is formed by physical vapor deposition, electroplating, chemical plating or spray coating etc.

Therefore, by applying light guide plate backlight technique to logo design and combining the light guide plate backlight technique with the bottom plate, a vehicle brand may be accurately identified by other road users whether during daytime or at night or when light is insufficient. In addition, because the bottom plate may have metallic appearance, the logo pattern may display with metal texture at daytime.

In one embodiment, the bottom plate 130 may be a plastic plate treated by physical vapor deposition, electroplating, chemical plating or spray coating etc. The metal layer on the surface of the bottom plate 130 may be made from a metal, for example, aluminum, silver or zinc, so that the bottom plate 130 may have metallic appearance. The color of the metal layer may be silvery white, blue red, etc. In order to allow the logo pattern to illuminate brightly at night, the bottom plate 130 may have intense reflection capabilities.

A shading film 6 is disposed between the first shell 110 and the light guide plate 120 for preventing non-uniform light due to overbrightness caused by direct irradiation of a part of the region of the first shell 110 with an LED.

In one embodiment, the illuminating element 141 may be an LED or LD (lasing diode). A plurality of illuminating elements 141, such as, for example 4-8 LEDs, may be provided on the circuit board 140, and the circuit board 140 is electrically connected with inside-circuits of the vehicle. A switch may be disposed on a central control board of the vehicle for controlling the on and off states of the LED, by which a driver may control the LED to turn on/off. When driving at daytime, the LED is turned off, and by cooperation between the first shell 110 and the bottom plate 130 having metallic appearance, the logo pattern may be displayed with a full and splendent metal texture. When driving at night, the illuminating element 141 is turned on, by cooperation between the first shell 110 and backlight of the light guide plate 120, the license plate device may emit light, and light is transmitted out through the region of the transparent first predetermined logo pattern on the first shell 110, so that the logo pattern may be observed easily. In this way, the vehicle brand or logo pattern may be identified easily. In one embodiment, a photosensing element (not shown) may also be disposed in a circuit board 140 for automatically controlling based on light change to control the illuminating state of the license plate device.

In one embodiment, the first predetermined logo pattern on the first shell 110 may have a flat, depressed or protruded structure. The depressed structure may allow the license plate device to exhibit better stereoscopic impression.

The light guide plate 120 is formed with light guide microprism structures, a region constituted by the microprism structures corresponds to a region of the first predetermined logo pattern on the first shell 110, and the region constituted by the light guide microprism structures is larger than the region of the first predetermined logo pattern on the first shell 110. In this way, the transparent region of the first shell 110 may be fully irradiated by light at night, and the luminance of the license plate device is uniform.

In one embodiment, the second shell 150 may be a plastic plate, and a metal terminal 220 is disposed on the second shell 150. The first shell 110 and the second shell 150 are fixed together by the metal terminal 220 and a metal terminal pressing plate (not shown). In this way, the first shell 110 and the second shell 150 may be hermetically and fixedly connected with each other, thus preventing substances such as air, dusts or water from entering into the license plate device to avoid influence on light emitting of the license plate device at night. The metal terminal pressing plate is connected with the second shell 150.

Alternatively, a connector 230 is disposed on a back surface of the second shell 150 for fixing the license plate device onto the vehicle.

### Second Embodiment

The license plate device for the vehicle according to this embodiment will be described below with reference to Figs. 2-3. In this embodiment, the license plate device has a structure substantially similar to that of the license plate device in the first Embodiment, and the same or similar elements and the elements having same or similar functions are denoted by like reference numerals in the first Embodiment and the second Embodiment, so detailed description thereof will be omitted here for clarity purpose.

As shown in Fig. 2, the first shell 110 has a transparent region 111 forming a first predetermined logo pattern (e.g., the first predetermined logo pattern in Fig. 2 is "ABC") and a nontransparent region 112. That is, the first shell 110 is made of the transparent region 111 and the nontransparent region 112, in which a region of the first predetermined logo pattern is transparent, and the remaining regions are nontransparent. The nontransparent region 112 may have any color after plating.

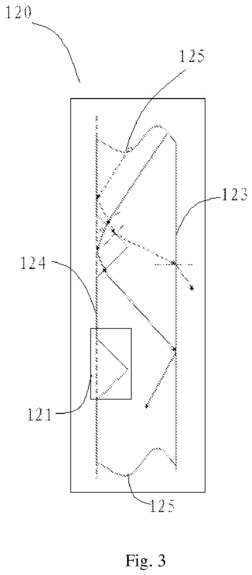

Referring to Fig. 3, the light guide plate 120 is disposed behind the first shell 110 and formed with a plurality of microprism structures 121 and an accommodating groove 122. The plurality of microprism structures 121 are configured to transmit at least a part of light emitted by the illuminating element 141 penetrating through the light guide plate 120 from a face of the light guide plate 120 facing the first shell 110. Particularly, the plurality of microprism structures 121 are configured to change a propagation direction of light in the light guide plate 120 so as to transmit the light from a face 123 of the light guide plate 120 facing the first shell 110 (in a direction shown by arrows in Fig. 3). As shown in Fig. 3, the plurality of microprism structures 121 are distributed on a region of the light guide plate 120 corresponding to the transparent region 111 of the first shell 110 and disposed on a face 124 of the light guide plate 120 facing toward the bottom plate 130. In some embodiments, the light guide plate 120 is transparent, that is, the bottom plate 130 may be seen through the light guide plate 120.

It should be noted that in some embodiments, each microprism structure 121 has a triangular cross section as shown in Fig. 3 in a plane in parallel with a lateral side of the light guide plate 120, and a bottom edge of the triangle faces toward the bottom plate 130, however, the present disclosure is not limited hereto. For example, each microprism structure 121 may also have an arcuate cross section, a square cross section, a semicircular cross section, etc only if each microprism structure 121 is configured to be reflective or refractive to change at least a part of the lights penetrating through the light guide plate 120 toward the first shell 110.

The bottom plate 130 is disposed behind the light guide plate 120, and formed with a via hole 131 corresponding to the accommodating groove 122. As shown in Fig. 2, six via holes 131 are formed in the bottom plate 130. However, in other embodiments, the number of the via holes 131 is not limited hereto, and the position, the shape and the number of the via holes 131 may be determined according to the shape of the first predetermined logo pattern.

The circuit board 140 is provided behind the bottom plate 130 and formed with an illuminating element 141 as a light source for the license plate device for the vehicle. The illuminating element 141 penetrates through the via hole 131 to be embedded in the accommodating groove 122. After refracted and scattered by the plurality of microprism structures 121 on the light guide plate 120, light emitted by the illuminating element 141 enters in an incident plane 125 (the incident plane 125 refers to a periphery wall of the accommodating groove 122 in the light guide plate 120) and leaves from an exit surface 123 (the exit surface 123 refers to the face 123 of the light guide plate 120 facing toward the first shell 110). For example, the illuminating element 141 is an LED. The LED has advantages of energy saving and long service life, and consequently may prolong the illuminating time of the license plate device for the vehicle and improve the quality of the license plate device for the vehicle.

The second shell 150 is disposed behind the circuit board 140, and hermetically connected with the first shell 110. A sealed accommodating space (not shown) is defined between the first shell 110 and the second shell 150. The light guide plate 120, the bottom plate 130 and the circuit board 140 are accommodated in the sealed accommodating space. For example, the second shell 150 is hermetically connected with the first shell 110 by ultrasonic welding. Therefore, a sealing element may be omitted, the cost may be reduced, and the sealing effect may be enhanced.

With the license plate device for the vehicle according to an embodiment of the present disclosure, by hermetically connecting the second shell 150 with the first shell 110, the sealed accommodating space is isolated from an environment, thus ensuring the weatherability of the license plate device for the vehicle. By forming the transparent region 111 of the first shell 110 with a predetermined logo pattern, because a face of the bottom plate 130 facing the first shell 110 has a metal background color, when the predetermined logo pattern does not need to be illuminated (when light is sufficient or at daytime), by cooperation between the first shell 110 and the bottom plate 130, the color (i.e., metal background color) of the bottom plate 130 may be presented in the transparent region 111 of the first shell 110, and the predetermined logo pattern with a metal background color may be observed directly through the transparent region 111, so that the license plate device may have the characteristics of a conventional one. When the predetermined logo pattern needs to be illuminated (when light is insufficient or at night), the light guide plate 120 is illuminated, light emitted by the illuminating element enters in the incident plane 125 (the incident plane 125 refers to a periphery wall of the accommodating groove 122) of the light guide plate 120, total reflection of light in the light guide plate 120 may be destroyed by the plurality of microprism structures 121 on the light guide plate 120, and the light emitted by the illuminating element is refracted out from the face 123 of the light guide plate 120 facing the first shell 110 and penetrates through the transparent region 111 of the first shell 110, so that the illuminating predetermined logo pattern may be observed directly, the entire surface of the predetermined logo pattern may be illuminated, the illuminating effect may be exquisite, soft and uniform, and the license plate device may be easily identified with aesthetic attractive appearance.

In order to further ensure the sealing performance and the robustness of the first shell 110 and the second shell 150 in the license plate device, the license plate device for the vehicle according to an embodiment of the present disclosure further comprises a rubber plug 160 embedded in the second shell 150, and a conducting wire is connected in the sealed accommodating space through the rubber plug 160 to connect the conducting wire with the circuit board 140 so as to provide a control signal to the illuminating element 141. Particularly, the illuminating element is connected with a lamplight control switch, and a leading-out wire of the illuminating element 141 is connected with a lamplight control switch of a vehicle after led out from a hole of the rubber plug 160. The lamplight control switch may be used by a driver to control the illuminating element 141 to turn on or off. For example, at daytime or when light is sufficient, the illuminating element 141 is turned off by the driver, and by cooperation between the first shell 110 and the bottom plate 130, the logo pattern exhibits a full and splendent metal texture and may be used as a conventional license plate. At night or when light is insufficient, the illuminating element 141 is turned on by the driver, by cooperation between the first shell 110 and the light guide plate 120, light emitted by the illuminating element 141 is refracted by the plurality of microprism structures 121 on the light guide plate 120 to be refracted out from a forward direction of the first shell 110, and the plurality of microprism structures 121 are arranged in predetermined positions respectively, so that light may be transmitted from the entire surface of the transparent region 111 of the first shell 110. Not only is the luminescence is uniform, but also the illuminating pattern is clearly visible.

Alternatively, automatic control on turning on and off of the illuminating element 141 may be achieved by a sensing element and a controller (not shown). Particularly, the sensing element is used for detecting a change of an environmental illuminance. The controller is connected with the sensing element and the illuminating element 141 respectively, and configured to turn on the illuminating element 141 after the environmental illuminance detected by the sensing element is lower than a threshold and to turn off the illuminating element 141 after the environmental illuminance detected by the sensing element is higher than the threshold. The threshold may be presetted or determined empirically.

In some embodiments, a shading film (not shown) may be disposed between the light guide plate 120 and the first shell 110 for blocking light which is not refracted by the light guide plate 120 but transmitted out directly from the transparent region 111 of the first shell 110 after emitted by the illuminating element 141. In this way, irradiation to eyes as a result of direct illumination of a part of the transparent region 111 of the first shell 110 by the illuminating element 141 may be prevented.

In one embodiment, the transparent region 111 of the first shell 110 has a flat structure. Advantageously, the transparent region 111 of the first shell 110 may have a depressed structure or protruded structure, thus allowing the transparent region 111 to exhibit good stereoscopic impression or embossment and enhancing the display effect of the logo pattern.

In one embodiment, the light guide plate 120 is made from an anti-UV (anti-ultraviolet) material, thus alleviating the aging speed of the light guide plate 120 under ultraviolet irradiation and further enhancing the weatherability of the license plate device. Certainly, the present disclosure is not limited hereto, for example, the light guide plate 120 may also be made from a PC (polycarbonate) material. In addition, an edge of the first shell 110 may be a transparent region, and an edge of the light guide plate 120 is cut into an inclined plane. In this way, after the illuminating element 141 is illuminated, an illuminating frame appears on an edge of the pattern of the license plate device for surrounding the pattern of the license plate device, and through refraction of light by the inclined plane, the entire license plate device may impress users with a stereoscopic appearance, thus further enhancing the visual effect thereof.

In some embodiments, the light guide plate 120 and the microprism structure 121 are integrally formed, and the plurality of microprism structures 121 are formed on another face (a face of the light guide plate 120 facing the bottom plate 130) of the light guide plate 120. In one embodiment, the microprism structure 121 and the light guide plate 120 may be integrally formed by injection molding or extrusion molding, or the plurality of microprism structures 121 may be formed on the light guide plate 120 by hot press molding. Therefore, the light guide plate 120 may have good optical transmittance.

The bottom plate 130 may be formed by a plastic plate or film plated with a metal layer. Particularly, the metal layer may be formed by PVD (physical vapor deposition), electroplating, chemical plating, spray coating, etc. In this way, the metal layer is compact and flat and may have good reflection capability. Further, the metal layer may be made from a metal, for example, aluminum, silver or zinc, so that the surface of the bottom plate 130 may have a metal background color. Accordingly, according to practical requirements, the color, i.e., metal background color, of the metal film may be an eye-catching color, for example, white, blue or red, in order to meet requirements of cultural inclination.

Certainly, the bottom plate 130 may also be a metal plate, for example, a copper plate or an aluminum plate, provided that the surface of the metal plate is flat and may reflect light.

With the license plate device according to an embodiment of the present disclosure, by cooperation between the first shell and the bottom plate, a metal texture may be ensured, and the license plate device may be used as a conventional one when the illuminating element is turned off when light is sufficient (at daytime). When the illuminating element is turned on when light is insufficient (at night), by cooperation between the first shell and the light guide plate, the entire surface of the logo pattern may be illuminated, the license plate device may be used as an illuminating logo, the illuminating effect may be exquisite, soft and uniform, and the automobile license plate may be clearly identified by other road users without threatening traffic safety caused by over-brightness. In addition, the number of the illuminating elements (LEDs) is few, the illuminating elements may be easily sealed, the reliability of the illuminating elements is high, the miniaturization, the slimness and the commercialization of the license plate device may be facilitated, and the license plate device may have the advantages of compact structure, energy saving, environmental protection, low cost, and convenient promotion.

### Third Embodiment

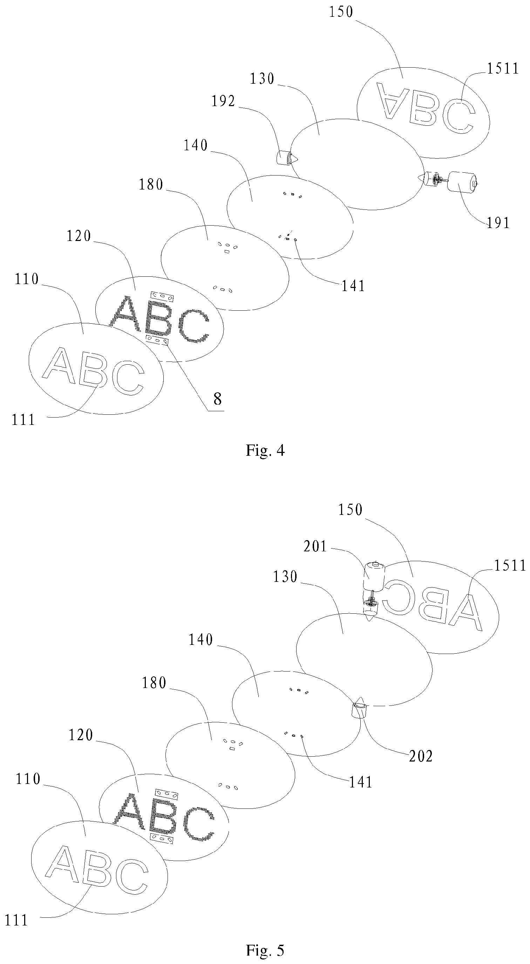

The license plate device for the vehicle according to the third embodiment of the present disclosure will be described hereinafter with reference to Figs. 4-5. In this embodiment, the license plate device has a structure substantially similar to that in the first Embodiment, and the same or similar elements and the elements having same or similar functions are denoted by like reference numerals in the first and third Embodiments, so detailed description thereof will be omitted here for clarity purpose.

In some embodiments, the first shell 110 may be a plastic plate, in which a region of the first predetermined logo pattern is transparent, and other regions may have desired colors after surface plating. In some embodiments, the second shell 150 is a plastic plate, the entire surface of which is surface treated to achieve a fixed identification effect required by a user.

As shown in Fig. 4, a second predetermined logo pattern 1511 is formed on an external surface of the second shell 150, and the second predetermined logo pattern 1511 is configured to have a pattern substantially identical with the first predetermined logo pattern formed by the transparent region 111 when transformed to a direction toward which the second predetermined logo pattern faces. That is, after rotated through a certain angle, the first predetermined logo pattern has a pattern substantially identical with that of the second predetermined logo pattern 1511.

The third embodiment is slightly different from the second Embodiment in that the circuit board 140 is disposed between the light guide plate 120 and the bottom plate 130.

In some embodiments, the bottom plate 130 is a plastic plate, which may play an important role during the whole switching process of the license plate device. In one embodiment, a geometrical central line of the bottom plate 130 is a rotation axis, and the rotation and switching function may be achieved by a drive shaft 191 and a restricting shaft 192 which are disposed on two lateral sides of the bottom plate 130 respectively, as shown in Fig. 4. The drive shaft 191 is driven by a step motor (not shown) to achieve accurate switching and positioning of the license plate device. An opening (not shown) may be formed at a center of the restricting shaft 192, so that an electronic device inside the license plate device may be connected with the electronic circuits of the vehicle via a conducting wire through the opening.

According to an embodiment of the present disclosure, by combing conventional logo design with light guide plate backlight technique, a bifacial rotatable license plate device may be designed, so that the license plate device may play a role of a conventional logo at daytime, and may emit light by light guide plate backlight at night to be identified. With the license plate device according to an embodiment of the present disclosure, the vehicle license plate may be accurately identified by other road users whether at daytime or night or when light is insufficient.

Advantageously, the license plate device may be rotated by 180° in a horizontal direction. In this case, the first predetermined logo pattern on the first shell 110 and the second predetermined logo pattern 1511 on the second shell 150 are horizontally axisymmetrical. In other words, when observed in a plane in which the first shell 110 or the second shell 150 is located, the first predetermined logo pattern and the second predetermined logo pattern 1511 are horizontally symmetrical.

A horizontal rotating device for rotating the license plate device horizontally is disposed on both horizontal lateral sides of the bottom plate 130. In one embodiment, the horizontal rotating device comprises: a drive shaft 191 disposed on one horizontal lateral side of the bottom plate 130 for controlling the license plate device to rotate about the horizontal direction; and a restricting shaft 192 disposed on the other horizontal lateral side of the bottom plate 130 for controlling the rotating and positioning of the license plate device about the horizontal direction. In one embodiment, the horizontal rotating device is disposed on both horizontal lateral sides of the bottom plate 130 along a horizontal geometrical central line of the bottom plate 130. In this way, the rotation of the bottom plate 130 may be better controlled.

As shown in Fig. 4, the first predetermined logo pattern and the second predetermined logo pattern 1511 are horizontally axisymmetrical.

When the license plate device according to an embodiment of the present disclosure is used, at daytime, the second shell 150 faces toward the normal users, the license plate device may appear as a conventional one; at night or when light is insufficient, the license plate device is rotated around the horizontal direction by 180 degrees, so that the first shell 110 faces externally, and by cooperation between the first shell 110 and the light guide plate 120, the first predetermined logo pattern on the first shell 110 may be illuminated, so that the license plate device may be identified easily.

In one embodiment, the license plate device may be rotated by 180° about a vertical axis. In this case, the first predetermined logo pattern on the first shell 110 and the second predetermined logo pattern 1511 on the second shell 150 are vertically axisymmetrical. In other words, when observed in a plane in which the first shell 110 or the second shell 150 is located, the first predetermined logo pattern and the second predetermined logo pattern 1511 are vertically symmetrical. In one embodiment, as shown in Fig. 5, a vertical rotating device for rotating the license plate device about the vertical direction is disposed on both vertical sides of the bottom plate 130. In one embodiment, the vertical rotating device comprises: a drive shaft 201 disposed on one vertical side of the bottom plate 130 for controlling the license plate device to rotate about the vertical direction; and a restricting shaft 202 disposed on the other vertical side of the bottom plate 130 for controlling the rotating and positioning of the license plate device about the vertical direction.

In some embodiments, the vertical rotating device is disposed on both vertical sides of the bottom plate 130 along a vertical geometrical central line of the bottom plate 130. In this way, the rotation of the bottom plate 130 may be better controlled.

As shown in Fig. 5, the first predetermined logo pattern and the second predetermined logo pattern 1511 are vertically axisymmetrical.

When the license plate device according to an embodiment of the present disclosure is used, at daytime, the second shell 150 faces externally, the license plate device appears like a conventional logo. At night or when light is insufficient, the license plate device is rotated about the vertical direction by 180 degrees so that the first shell 110 faces externally, and by cooperation between the first shell 110 and the light guide plate 120, the first predetermined logo pattern on the first shell 110 may be illuminated, so that the license plate device may be identified easily.

In one embodiment, a reflecting plate 180 is disposed between the light guide plate 120 and the circuit board 140 for increasing the utilizing rate and uniformity of light. In some embodiments, the reflecting plate 180 may be a plastic plate having reflection effect formed by surface plating, or may be a reflective plate having a smooth flat surface.

In one embodiment, a photosensing element (not shown) may be disposed on a side of the circuit board 140 facing toward the first shell 110 for automatically switching the orientation of the first shell 110 and the second shell 150 and turning on and off the LEDs. When driving at daytime, the second shell 150 faces outwards, the light guide plate 120 does not guide light, backlight does not function, and the license plate device is used as a conventional license plate. When driving at night or when light is insufficient, the first shell 110 faces outwards, by cooperation between the first shell 110 and the light guide plate 120, the logo pattern 111 on the first shell 110 is illuminated, which is clearly visible, and the shape of the observed illuminating region is just the shape of the logo, so that the automobile logo pattern may be identified easily. In some embodiments, a control switch may be disposed on a central control board, so that the LEDs and the orientations of the first shell 110 and the second shell 150 may be manually controlled to control the use state of the license plate device.

Although explanatory embodiments have been shown and described, it would be appreciated by those skilled in the art that the above embodiments can not be construed to limit the present disclosure, and changes, alternatives, and modifications can be made in the embodiments without departing from the scope of the present disclosure.

## Claims

1. A license plate device for a vehicle, comprising:
a first shell (110) having a transparent region (111) forming a first predetermined logo pattern and a nontransparent region (112);
a second shell (150) fixedly connected with the first shell (110), with a sealed accommodating space defined therebetween;
a bottom plate (130) disposed in the sealed accommodating space;
a light guide plate (120) disposed between the bottom plate (130) and the first shell (110) which is formed with an accommodating groove (122); and
a circuit board (140) disposed between the light guide plate (120) and the second shell (150) which is formed with an illuminating element (141) on a surface thereof facing toward the light guide plate (120) to be accommodated in the accommodating groove (122), wherein
the light guide plate (120) is formed with a plurality of microprism structures (121) configured to transmit at least a part of light emitted by the illuminating element (141) penetrating through the light guide plate (120) from a face of the light guide plate (120) facing the first shell (110), **characterized in that**,
each microprism structure (121) is provided on a surface of the light guide plate (120) facing toward the bottom plate (130), and the microprism structure (121) has a triangular cross section in a plane in parallel with a lateral side of the light guide plate (120), and a bottom edge of the triangle faces toward the bottom plate (130).

2. The license plate device according to claim 1, wherein the bottom plate (130) is formed with a via hole (131), through which the illuminating element (141) penetrates to be accommodated in the accommodating groove (122).

3. The license plate device according to claim 1, wherein the transparent region (111) has a flat structure, a depressed structure or a protruded structure.

4. The license plate device according to claim 1, wherein the light guide plate (120) and the microprism structure (121) are integrally formed.

5. The license plate device according to claim 3, wherein the microprism structure (121) and the light guide plate (120) are integrally formed by injection molding, extrusion molding, or the plurality of microprism structures (121) are formed on the light guide plate (120) by hot press molding.

6. The license plate device according to claim 1, wherein the illuminating element (141) is an LED or LD.

7. The license plate device according to claim 1, wherein an edge of the light guide plate (120) is cut into an inclined plane.

8. The license plate device according to claim 1, wherein the bottom plate (130) is a metal plate or a plate formed with a metal layer on a surface thereof.

9. The license plate device according to claim 1, wherein the circuit board (140) is electrically connected with a lamplight control circuit of the vehicle.

10. The license plate device according to claim 1, further comprising:
a sensing element for detecting an environmental illuminance; and
a controller for controlling the illuminating element (141) to turn on or off according to the illuminance detected by the sensing element.

11. The license plate device according to claim 1, further comprising:
a shading film (6) disposed between the light guide plate (120) and the first shell (110) for blocking light which are not refracted by the light guide plate (120) but transmitted out directly after emitted by the illuminating element (141).

12. The license plate device according to claim 1, wherein the first shell (110) and the second shell (150) are hermetically connected with each other.

13. The license plate device according to claim 12, wherein the first shell (110) and the second shell (150) are hermetically connected with each other by ultrasonic welding.

14. The license plate device according to claim 1, further comprising:
a rubber plug (160) embedded in the second shell (150), through which a conducting wire is penetrated to be connected with the circuit board (140).

## Patentansprüche

1. Nummernschildvorrichtung für ein Fahrzeug mit:
einer ersten Schale (110) mit einem transparenten Bereich (111), der ein vorbestimmtes Logomuster ausbildet, und einem nichttransparenten Bereich (112);
einer zweiten Schale (150), die fest mit der ersten Schale (110) verbunden ist, mit einem dichtschließenden Aufnahmeraum, der dazwischen definiert ist;
ein Bodenblech (130), das in dem dichtschließenden Aufnahmeraum angeordnet ist;
ein Lichtleitblech (120), das zwischen dem Bodenblech (130) und der ersten Schale (110) angeordnet ist, das mit einer Aufnahmenut (122) ausgebildet ist; und
eine Schaltplatte (140), die zwischen dem Lichtleitblech (120) und der zweiten Schale (150) angeordnet ist, die mit einem Beleuchtungselement (141) auf einer dem Lichtleitblech (120) gegenüberliegenden Oberfläche davon ausgebildet ist, , um in die Aufnahmenut (122) aufgenommen zu werden, wobei
das Lichtleitblech (120) mit einer Mehrzahl von Mikroprismenstrukturen (121) ausgebildet ist, die konfiguriert sind, zumindest ein Teil des von dem Beleuchtungselement (141) emittierten Lichtes, das durch das Lichtleitblech (120) von einer Stirnfläche des Lichtleitbleches (120), die der ersten Schale (110) gegenüberliegt, eindringt, zu transmittieren, **dadurch gekennzeichnet, dass**
jede Mikroprismenstruktur (121) auf einer Oberfläche des Lichtleitbleches (120), die dem Bodenblech (130) gegenüberliegt, bereitgestellt wird und dass die Mikroprismenstruktur einen dreieckigen Querschnitt in einer Ebene parallel zu einer lateralen Seite des Lichtleitbleches (120) aufweist, und dass eine Bodenkante des Dreiecks der Bodenplatte (130) gegenüberliegt.

2. Nummernschildvorrichtung nach Anspruch 1, wobei das Bodenblech (130) mit einem Durchgangsloch (131) ausgebildet ist, durch das das Beleuchtungselement (141) eindringt, um in die Aufnahmenut (122) aufgenommen zu werden.

3. Nummernschildvorrichtung nach Anspruch 1, wobei der transparente Bereich (111) eine flache Struktur, eine niedergedrückte Struktur oder eine hervorstehende Struktur aufweist

4. Nummernschildvorrichtung nach Anspruch 1, wobei das Lichtleitblech (120) und die Mikroprismenstruktur (121) integral ausgebildet sind.

5. Nummernschildvorrichtung nach Anspruch 3, wobei die Mikroprismenstruktur (121) und das Lichtleitblech (120) integral durch Spritzguss, Strangpressen ausgebildet sind, oder die Mehrzahl von Mikroprismenstrukturen (121) auf dem Lichtleitblech (120) durch Warmformpressen ausgebildet ist.

6. Nummernschildvorrichtung nach Anspruch 1, wobei das Beleuchtungselement (141) eine LED oder eine LD ist.

7. Nummernschildvorrichtung nach Anspruch 1, wobei eine Kante des Lichtleitbleches (120) zu einer geneigten Ebene geschnitten ist.

8. Nummernschildvorrichtung nach Anspruch 1, wobei das Bodenblech (130) ein Metallblech oder ein Blech, das mit einer Metallschicht auf einer Oberfläche davon ausgebildet ist, ist.

9. Nummernschildvorrichtung nach Anspruch 1, wobei die Schaltplatte (140) elektrisch mit einem Lampenlichtsteuerschaltkreis des Fahrzeugs verbunden ist.

10. Nimmernschildvorrichtung nach Anspruch 1, weiter aufweisend:
ein Erfassungselement zum Detektieren einer Umgebungsbeleuchtung; und
ein Steuergerät zum Steuern des Beleuchtungselementes (141), sich einzuschalten oder auszuschalten gemäß der Beleuchtung, die von dem Erfassungselement detektiert wird.

11. Nummernschildvorrichtung nach Anspruch 1, weiter aufweisend:
einen Schattierungsfilm (6), der zwischen dem Lichtleitblech (120) und der ersten Schale (110) angeordnet ist, um Licht, das nicht von der Lichtleitplatte (120) gebrochen wird, sondern direkt austransmittiert wird, nachdem es von dem Beleuchtungselement (141) emittiert worden ist, zu blockieren.

12. Nummernschildvorrichtung nach Anspruch 1, wobei die erste Schale (110) und die zweite Schale (150) hermetisch miteinander verbunden sind.

13. Nummernschildvorrichtung nach Anspruch 12, wobei die erste Schale (110) und die zweite Schale (150) miteinander durch Ultraschallschweißen hermetisch verbunden sind.

14. Nummernschildvorrichtung nach Anspruch 1, weiter aufweisend:
einen Gummistopfen (160), der in der zweiten Schale (150) eingebettet ist, durch den ein Leitungskabel eindringt, um mit der Schaltplatte (140) verbunden zu werden.

## Revendications

1. Dispositif de plaque d'immatriculation pour un véhicule, comportant :
une première coque (110) ayant une zone transparente (111) formant un premier motif de logo prédéterminé et une zone non transparente (112) ;
une seconde coque (150) fixement reliée à la première coque (110), avec un espace de réception étanche défini entre celles-ci ;
une plaque inférieure (130) disposée dans l'espace de réception étanche ;
une plaque de conduction de lumière (120) disposée entre la plaque inférieure (130) et la première coque (110) qui est formée avec une rainure de réception (122) ; et
une carte à circuit (140) disposée entre la plaque de conduction de lumière (120) et la seconde coque (150) qui est formée avec un élément d'éclairage (141) sur une surface de celle-ci dirigée vers la plaque de conduction de lumière (120) pour être reçue dans la rainure de réception (122), dans lequel la plaque de conduction de lumière (120) est formée avec une pluralité de structures microprismatiques (121) configurées pour transmettre au moins une partie de la lumière émise par l'élément d'éclairage (141) pénétrant à travers la plaque de conduction de lumière (120) depuis une face de la plaque de conduction de lumière (120) dirigée vers la première coque (110), **caractérisé en ce que** chaque structure microprismatiques (121) est agencée sur une surface de la plaque de conduction de lumière (120) dirigée vers la plaque inférieure (130), et la structure de microprisme (121) a une section transversale triangulaire dans un plan parallèle à un côté latéral de la plaque de conduction de lumière (120), et un bord inférieur du triangle est dirigé vers la plaque inférieure (130).

2. Dispositif de plaque d'immatriculation selon la revendication 1, dans lequel la plaque inférieure (130) est formée avec un trou d'interconnexion (131), à travers lequel pénètre l'élément d'éclairage (141) pour être reçu dans la rainure de réception (122).

3. Dispositif de plaque d'immatriculation selon la revendication 1, dans lequel la zone transparente (111) a une structure plate, une structure en creux ou une structure en relief.

4. Dispositif de plaque d'immatriculation selon la revendication 1, dans lequel la plaque de conduction de lumière (120) et la structure de microprisme (121) sont formées d'un seul tenant.

5. Dispositif de plaque d'immatriculation selon la revendication 3, dans lequel la structure de microprisme (121) et la plaque de conduction de lumière (120) sont formées d'un seul tenant par un moulage par injection, un moulage par extrusion, ou la pluralité de structures de microprisme (121) sont formées sur la plaque de conduction de lumière (120) par moulage par compression à chaud.

6. Dispositif de plaque d'immatriculation selon la revendication 1, dans lequel l'élément d'éclairage (141) est une DEL ou une DL.

7. Dispositif de plaque d'immatriculation selon la revendication 1, dans lequel un bord de la plaque de conduction de lumière (120) est découpé dans un plan incliné.

8. Dispositif de plaque d'immatriculation selon la revendication 1, dans lequel la plaque inférieure (130) est une plaque métallique ou une plaque formée avec une couche métallique sur une surface de celle-ci.

9. Dispositif de plaque d'immatriculation selon la revendication 1, dans lequel la carte à circuit (140) est électriquement reliée à un circuit de commande de lampe du véhicule.

10. Dispositif de plaque d'immatriculation selon la revendication 1, comportant en outre :
un élément de détection pour détecter un éclairage ambiant ; et
une commande pour commander la mise en marche ou l'arrêt de l'élément d'éclairage (141) en fonction de l'éclairage détecté par l'élément de détection.

11. Dispositif de plaque d'immatriculation selon la revendication 1, comportant en outre :
un film d'ombrage (6) disposé entre la plaque de conduction de lumière (120) et la première coque (110) pour bloquer la lumière qui n'est pas réfractée par la plaque de conduction de lumière (120) mais transmise à l'extérieur directement après avoir été émise par l'élément d'éclairage (141).

12. Dispositif de plaque d'immatriculation selon la revendication 1, dans lequel la première coque (110) et la seconde coque (150) sont hermétiquement reliées l'une à l'autre.

13. Dispositif de plaque d'immatriculation selon la revendication 12, dans lequel la première coque (110) et la seconde coque (150) sont hermétiquement reliées l'une à l'autre par un soudage par ultrasons.

14. Dispositif de plaque d'immatriculation selon la revendication 1, comportant en outre :
un bouchon en caoutchouc (160) intégré dans la seconde coque (150), à travers lequel pénètre un fil conducteur à raccorder à la carte à circuit (140).
